# EUROPEAN PATENT APPLICATION

(11) **EP 4 786 233 A1**
(43) Date of publication of application: **05.08.2026**
(21) Application number: 24890747.9
(22) Date of filing: 14.11.2024
(51) Int. Cl.: B60J 7/00

(54) **REEL ASSEMBLY AND SUNROOF ASSEMBLY**

(30) Priority: 14.11.2023 CN 202311507986
(71) Applicant: Fuyao Glass Industry Group Co., Ltd., Fuqing, Fujian 350300 (CN)
(72) Inventor: WU, Yue, Fuzhou, Fujian 350300 (CN); WANG, Baoyong, Fuzhou, Fujian 350300 (CN); LIU, Xianping, Fuzhou, Fujian 350300 (CN); YU, Jianzhao, Fuzhou, Fujian 350300 (CN); CHEN, Jie, Fuzhou, Fujian 350300 (CN); WANG, Zhixin, Fuzhou, Fujian 350300 (CN)
(74) Representative: Mewburn Ellis LLP
(86) International application number: PCT/CN2024/131918
(87) International publication number: WO 2025/103392

(57) **Abstract**

A winding shaft assembly and a sunroof assembly including the same are provided. The winding shaft assembly (10) includes an inner tube (11), a connecting rod (12), two first pulleys (13), a spring fixing seat (141), a spring fixing shaft (142), a spring (14), and two winding shaft supports (15). The sunroof assembly (20) further includes a driving mechanism (28) and a synchronous belt (24). The driving mechanism is connected to at least one first pulley and/or at least one second pulley. The winding shaft assembly has long service life. A shade fabric of the sunroof assembly remains in a tensioned state, thereby ensuring movement consistency of the shade fabric. The driving mechanism can be arranged at the front end or the rear end, thereby providing greater flexibility in spatial layout during vehicle design. By replacing the cable pulley with the synchronous pulley, the space occupied by the sunroof assembly in the width direction of the vehicle can be reduced. The transmission of the synchronous belt can reduce the noise during operation of the shade fabric.

## Description

### CROSS-REFERENCE TO RELATED APPLICATION(S)

This application claims priority to Chinese Patent Application No. 202311507986.7, filed November 14, 2023 to China national intellectual property administration (CNIPA), and entitled "WINDING SHAFT ASSEMBLY AND SUNROOF ASSEMBLY", the entire disclosure of which is hereby incorporated by reference.

### TECHNICAL FIELD

This disclosure relates to the field of vehicle technology, and in particular, to a winding shaft assembly and a sunroof assembly.

### BACKGROUND

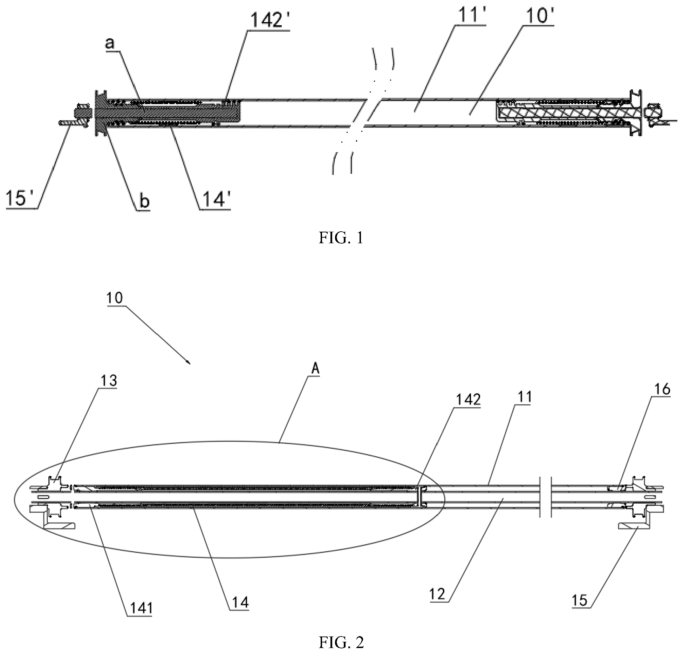

At present, in an existing vehicle electric sunroof, the opening or closing of a shade fabric is generally achieved by a single motor driving a flexible shaft slider, with the slider being connected to a pull rod, thereby driving the shade fabric to move forward and backward. During the opening of the shade fabric, the shade fabric is wound up by means of force applied by a winding shaft, so as to ultimately meet the functional requirements. A winding shaft assembly usually consists of two springs (as illustrated in FIG. 1). In such a winding shaft assembly, two springs are used to apply winding force to pulleys on both sides respectively. Due to machining and assembly tolerances, the winding forces of the two springs are prone to be inconsistent, resulting in uneven forces applied to the pulleys on both sides, which in turn causes inconsistent movements at both ends of the shade fabric, thereby leading to jamming and titling of the shade fabric.

Patent document CN219055937U discloses a direct-drive sunroof sunshade structure, in which a transmission mechanism is used to drive the sunshade to open or close. However, due to structural limitations, the motor can only be mounted at one end of the winding shaft.

The related art mainly has the following deficiencies:
(1) The two ends of the existing winding shaft assembly are provided with two independent winding mechanisms. Affected by machining and assembly tolerances, the forces applied to the pulleys on both sides are prone to be inconsistent, causing the shade fabric to easily jam and tilt during operation. Moreover, in the existing winding shaft assembly, the pulleys on both sides of the existing winding shaft assembly are prone to axial movement, resulting in uneven wear of a cable.
(2) In a pull-cord direct-drive sunshade, the motor can only be arranged on the same side as the winding shaft, resulting in significant limitations in spatial arrangement and positioning.
(3) The pull-cord direct-drive sunshade adopts a cable for transmission, and the pulleys occupy relatively large space in a width direction of a vehicle.
(4) In existing sunshade products, the motor drives a flexible shaft, which generates relatively large noise and is prone to abnormal noises.

### SUMMARY

The purpose of the present disclosure is to address the problems set forth in the above background by providing a winding shaft assembly and a sunroof assembly.

To achieve the above technical purpose, the technical solution adopted by the present disclosure is as follows.

A winding shaft assembly includes an inner tube, a connecting rod, two first pulleys, a spring fixing seat, a spring fixing shaft, a spring, and two winding shaft supports. The connecting rod is rotatably embedded in and passes through the inner tube. The two first pulleys are respectively disposed at two ends of the connecting rod and located outside the inner tube. The two first pulleys are fixedly connected to the connecting rod in a rotation direction of the connecting rod. The two first pulleys are movably connected to the connecting rod in an axial direction of the connecting rod. The spring fixing seat is disposed between the inner tube and the connecting rod and fixed at one end of the inner tube. The spring fixing seat is movably connected to the connecting rod in the axial direction of the connecting rod. The spring fixing shaft is fixed to the connecting rod and located inside the inner tube. The spring is wound around the connecting rod. The spring has one end fixed to the spring fixing seat and another end fixed to the spring fixing shaft. The two winding shaft supports are respectively disposed at the two ends of the connecting rod and located outside the two first pulleys. The spring has an axial tension to enable the two first pulleys to be pushed outward to the two winding shaft supports in the axial direction of the connecting rod.

Further, the inner tube, the connecting rod, the two first pulleys and the spring are coaxial.

Further, the winding shaft assembly further includes a fixing bushing. The fixing bushing is disposed between the inner tube and the connecting rod and fixed at another end of the inner tube. The connecting rod is rotatably mounted in the fixing bushing.

In one embodiment, an inner sleeve is provided between the connecting rod and the spring.

In one embodiment, an outer sleeve is provided between the spring and the inner tube.

Optionally, the spring is a coil spring or a torsion spring.

Meanwhile, the present disclosure further provides a sunroof assembly. The sunroof assembly includes glass, the winding shaft assembly as described above, two guide rails, two second pulleys, a pull rod, a shade fabric, and a driving mechanism. The winding shaft assembly is fixed to the glass. The two guide rails are spaced apart from each other and respectively disposed at two opposite ends of the winding shaft assembly. The two guide rails are fixed to the glass. Each of the two guide rails includes a first end close to the winding shaft assembly and a second end away from the winding shaft assembly. The two second pulleys are respectively disposed at second ends of the two guide rails. A synchronous belt is connected between each first pulley and a corresponding second pulley. The pull rod is spaced apart from the winding shaft assembly. The pull rod is slidably mounted between the two guide rails. The shade fabric has one end fixed to the inner tube and another end fixed to the pull rod. The shade fabric has two side edges respectively disposed in the two guide rails. The driving mechanism is connected to at least one of the two first pulleys and/or at least one of the two second pulleys.

Further, two sliders are respectively provided at two ends of the pull rod. Each of the two sliders includes a mounting portion, a sliding portion, and a fixing portion connected in sequence. The mounting portion is fixed to the pull rod. The sliding portion is slidably mounted in a corresponding guide rail. The fixing portion is fixed to the synchronous belt.

In one embodiment, the sunroof assembly further includes a support pulley and a guide member disposed at the first end of each of the two guide rails. The guide member defines a first recess. The support pulley is fixed in the first recess to support the synchronous belt.

Further, each of the two guide rails defines a guide groove and a slide groove in communication with the guide groove, and the slide groove is in sliding fit with the sliding portion. The guide member is provided with a first limiting member matched with a shape of the guide groove. The first limiting member is embedded in the guide groove.

In one embodiment, the sunroof assembly further includes a connecting member disposed at the second end of each of the two guide rails. The connecting member defines a second recess. One of the two second pulleys is fixed in the second recess.

Further, the connecting member is provided with a second limiting member matched with the shape of the guide groove. The second limiting member is embedded in the guide groove.

In one embodiment, each of the two first pulleys and each of the two second pulleys are gears. An inner surface of the synchronous belt is provided with multiple convex teeth matched with the gears. The gears are engaged with the multiple convex teeth.

Further, the fixing portion of each of the two sliders defines a recess portion that is matched with and snap-fitted with a convex tooth of the multiple convex teeth.

In one embodiment, an injection-molded block is provided on the synchronous belt. The fixing portion is snap-fitted with the injection-molded block.

In one embodiment, the sunroof assembly further includes a front beam and a rear beam. Two ends of the front beam are fixed to the second ends of the two guide rails. Two ends of the rear beam are fixed to first ends of the two guide rails. The shade fabric is supported by the rear beam.

Optionally, the synchronous belt is an open belt or a closed-loop belt.

Compared with the related art, the present disclosure has the following beneficial effects.
(1) By using the winding shaft assembly with the single spring, the axial tension generated by the spring in a stretched state pushes the two first pulleys outward in the axial direction of the connecting rod to the two winding shaft supports via the connecting rod and the spring fixing seat, respectively, thereby preventing axial movement of the inner tube and the first pulleys during rotation, improving the positional accuracy of the first pulleys, reducing the machining accuracy requirements for the inner tube, and extending the service life of the winding shaft assembly. Meanwhile, the winding force generated after pre-rotation of the spring keeps the shade fabric taut, ensuring that the shade fabric remains in a tensioned state during opening or closing, preventing sagging and also avoiding the formation of wrinkles. In addition, by applying winding force to both first pulleys simultaneously via the single spring, and by rigidly connecting the two first pulleys to the connecting rod in the rotation direction of the connecting rod, movement consistency of the shade fabric is ensured, thereby solving the problem that, when the pull rod is subjected to uneven forces, the two sides of the shade fabric move inconsistently, the pull rod tilts, and the shade fabric gets stuck in the guide rails and cannot continue to operate.
(2) The driving mechanism can be freely arranged at the front end or the rear end, thereby providing greater flexibility in spatial layout during vehicle design.
(3) By replacing the cable pulleys with synchronous pulleys, the space occupied by the sunroof assembly in the width direction of the vehicle can be reduced by approximately 20 mm.
(4) The transmission of the synchronous belt can reduce the noise during operation of the shade fabric.

### BRIEF DESCRIPTION OF THE DRAWINGS

FIG. 1 is a schematic structural view of a winding shaft assembly in the related art.
FIG. 2 is a schematic structural view of a winding shaft assembly in an embodiment of the present disclosure.
FIG. 3 is a partial enlarged view of FIG. 2 in Circle A.
FIG. 4 is a schematic structural view of a sunroof assembly in an embodiment of the present disclosure.
FIG. 5 is an exploded view of FIG. 4.
FIG. 6 is a partial enlarged view of FIG. 5 in Circle B.
FIG. 7 is a cross-sectional view of FIG. 4 taken along line A-A.
FIG. 8 is a partial enlarged view of FIG. 5 in Circle C.
FIG. 9 is an enlarged schematic view of connection between a slider and an open belt in an embodiment of the present disclosure.
FIG. 10 is an enlarged schematic view of connection between a slider and an open belt in another embodiment of the present disclosure.
FIG. 11 is an enlarged schematic view of connection between a slider and a closed-loop belt in an embodiment of the present disclosure.
FIG. 12 is an enlarged schematic view of connection between a slider and a closed-loop belt in another embodiment of the present disclosure.

### Description of reference signs:

10, winding shaft assembly; 11, inner tube; 12, connecting rod; 13, first pulley; 14, spring; 141, spring fixing seat; 142, spring fixing shaft; 15, winding shaft support; 16, fixing bushing; 17, inner sleeve; 18, outer sleeve;
20, sunroof assembly; 21, glass; 22, guide rail; 221, guide groove; 222, slide groove; 223, first end; 224, second end; 23, second pulley; 24, synchronous belt; 241, convex teeth; 242, injection-molded block; 25, pull rod; 26, slider; 261, mounting portion; 262, sliding portion; 263, fixing portion; 264, recess portion; 27, shade fabric; 28, driving mechanism; 29, guide member; 291, first recess; 292, first limiting member; 30, support pulley; 31, front beam; 32, rear beam; 33, connecting member; 331, second recess; 332, second limiting member;
*a,* fixing shaft; *b,* wheel.

### DETAILED DESCRIPTION

In order to make the above purposes, features, and advantages of the present disclosure more apparent and understandable, specific implementations of the present disclosure are elaborated below in conjunction with accompanying drawings. Many specific details are set forth in the following description to facilitate a full understanding of the present disclosure. However, the present disclosure can be implemented in many other ways different from those described herein. Those skilled in the art can make similar modifications without departing from the connotation of the present disclosure, and the present disclosure is not limited by the specific embodiments disclosed below.

As illustrated in FIG. 2 to FIG. 3, in some embodiments, the present disclosure provides a winding shaft assembly 10. The winding shaft assembly 10 includes an inner tube 11, a connecting rod 12, two first pulleys 13, a spring fixing seat 141, a spring fixing shaft 142, a spring 14, and two winding shaft supports 15. The connecting rod 12 is rotatably embedded in and passes through the inner tube 11. The two first pulleys 13 are respectively disposed at two ends of the connecting rod 12 and located outside the inner tube 11. The two first pulleys 13 are fixedly connected to the connecting rod 12 in a rotation direction of the connecting rod 12. The two first pulleys 13 are movably connected to the connecting rod 12 in an axial direction of the connecting rod 12. The spring fixing seat 141 is disposed between the inner tube 11 and the connecting rod 12 and fixed at one end of the inner tube 11. The spring fixing seat 141 is movably connected to the connecting rod 12 in the axial direction of the connecting rod 12. The spring fixing shaft 142 is fixed to the connecting rod 12 and located inside the inner tube 11. The spring 14 is wound around the connecting rod 12. One end of the spring 14 is fixed to the spring fixing seat 141, and the other end of the spring 14 is fixed to the spring fixing shaft 142. The two winding shaft supports 15 are respectively disposed at two ends of the connecting rod 12 and located outside the two first pulleys 13. The spring 14 has an axial tension to enable the two first pulleys 13 to be pushed outward to the two winding shaft supports 15 in the axial direction of the connecting rod 12.

During mounting, the spring 14 is wound around the connecting rod 12. One end of the spring 14 is fixed to the spring fixing seat 141, and the other end of the spring 14 is fixed to the spring fixing shaft 142. The connecting rod 12, together with the spring 14, passes through the inner tube 11. The spring fixing seat 141 is fixed at one end of the inner tube 11. By pushing the connecting rod 12, and the other end of the connecting rod 12 passes through the other end of the inner tube 11, so that the spring 14 is in a stretched state and generates an axial tension. Since the two first pulleys 13 are movably connected to the connecting rod 12 in the axial direction of the connecting rod 12 and the spring fixing seat 141 is movably connected to the connecting rod 12 in the axial direction of the connecting rod 12, the axial tension respectively pushes the first pulleys 13 disposed on both sides of the connecting rod 12 outward, via the connecting rod 12 and the spring fixing seat 141, to the winding shaft supports 15. Therefore, the axial movement of the inner tube 11 and the first pulleys 13 during rotation is avoided, the positional accuracy of the first pulleys 13 is improved, the dimensional machining accuracy required for the inner tube 11 is reduced, and the service life of the winding shaft assembly 10 is extended.

In this embodiment, optionally, the spring 14 is a coil spring or a torsion spring. It may be noted that the spring 14 is pre-rotated before being mounted into the winding shaft assembly 10. The winding force generated by the spring 14 after pre-rotation can tension the shade fabric 27, thereby ensuring that the shade fabric 27 remains in a tensioned state during the opening or closing, avoiding sagging and also avoiding the formation of wrinkles.

By applying winding force to the two first pulleys 13 simultaneously via the single spring 14, and since the two first pulleys 13 are fixedly connected to the connecting rod 12 in the rotation direction of the connecting rod 12, with the winding force being provided by only one spring 14, the two first pulleys 13 are always subjected to the same winding force, thereby ensuring the movement consistency of the shade fabric 27.

In this embodiment, further, the inner tube 11, the connecting rod 12, the first pulley 13, and the spring 14 are coaxial, so as to ensure the stable operation of the winding shaft assembly 10 and avoid noise.

In this embodiment, further, as illustrated in FIG. 2, the winding shaft assembly 10 further includes a fixing bushing 16. The fixing bushing 16 is disposed between the inner tube 11 and the connecting rod 12 and fixed at the other end of the inner tube 11. The connecting rod 12 is rotatably mounted in the fixing bushing 16. By providing the fixing bushing 16, the connecting rod 12 can be prevented from being displaced in the inner tube 11, thereby avoiding jamming of the shade fabric 27 during movement due to the axial misalignment of the two first pulleys 13.

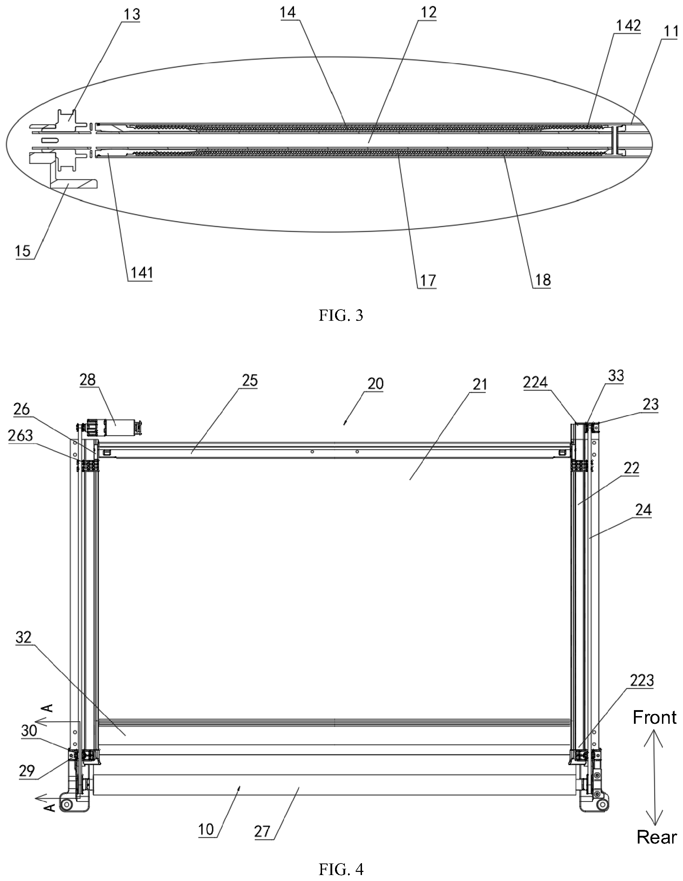

In one embodiment, as illustrated in FIG. 3, an inner sleeve 17 is provided between the connecting rod 12 and the spring 14. By providing the inner sleeve 17, abnormal noise caused by the friction between the spring 14 and the connecting rod 12 can be avoided.

In one embodiment, as illustrated in FIG. 3, an outer sleeve 18 is provided between the spring 14 and the inner tube 11. By providing the outer sleeve 18, abnormal noise caused by the friction between the spring 14 and the inner tube 11 can be avoided.

Meanwhile, as illustrated in FIG. 4, in some embodiments, the present disclosure further provides a sunroof assembly 20. The sunroof assembly 20 includes glass 21, the winding shaft assembly 10 as described above, two guide rails 22, two second pulleys 23, a pull rod 25, a shade fabric 27, and a driving mechanism 28. The winding shaft assembly 10 is fixed to the glass 21. The two guide rails 22 are spaced apart from each other and respectively disposed at two opposite ends of the winding shaft assembly 10. The two guide rails 22 are fixed to the glass 21. Each of the two guide rails 22 includes a first end 223 close to the winding shaft assembly 10 and a second end 224 away from the winding shaft assembly 10. The two second pulleys 23 are respectively disposed at second ends 224 of the two guide rails 22. A synchronous belt 24 is connected between each first pulley 13 and a corresponding second pulley 23. The pull rod 25 is spaced apart from the winding shaft assembly 10. The pull rod 25 is slidably mounted between the two guide rails 22. One end of the shade fabric 27 is fixed to the inner tube 11, and the other end of the shade fabric 27 is fixed to the pull rod 25. Two side edges of the shade fabric 27 are respectively disposed in the two guide rails 22. The driving mechanism 28 is connected to at least one of the two first pulleys 13 and/or at least one of the two second pulleys 23.

The winding force generated by the spring 14 after pre-rotation can tension the shade fabric 27 wound on the winding shaft assembly 10, thereby ensuring that the shade fabric 27 remains in a tensioned state during the opening or closing, avoiding sagging and also avoiding the formation of wrinkles.

Meanwhile, by replacing the cable pulleys with the first pulleys 13, the space occupied by the sunroof assembly 20 in the width direction of the vehicle can be reduced by approximately 20 mm. In addition, the transmission of the synchronous belt 24 can reduce the noise during operation of the shade fabric 27.

It may be noted that in this embodiment, the material of the glass 21 is not limited, and is typically inorganic glass, organic glass, or a composite material. The material of the guide rail 22 is not limited, and is typically plastic or metal. The material of the shade fabric 27 is not limited, and may be fabric, plastic, etc., and the shade fabric 27 may be used for sunshade or projection.

In this embodiment, further, two sliders 26 are respectively provided at two ends of the pull rod 25. Each of the two sliders 26 includes a mounting portion 261, a sliding portion 262, and a fixing portion 263 connected in sequence. The mounting portion 261 is fixed to the pull rod 25. The sliding portion 262 is slidably mounted in a corresponding guide rail 22. The fixing portion 263 is fixed to the synchronous belt 24.

It may be noted that the driving mechanism 28 is configured to drive at least one of the two first pulleys 13 and/or at least one of the two second pulleys 23 to rotate. The driving mechanism 28 can be freely arranged at the front end or the rear end of the sunroof assembly 20, thereby providing greater flexibility in spatial layout during the vehicle design. When the driving mechanism 28 is connected to one of the two first pulleys 13 (that is, when the driving mechanism 28 is arranged at the rear end of the sunroof assembly 20), the driving mechanism 28 drives one of the two first pulleys 13 to rotate to drive the synchronous belt 24 on the same side, and the first pulley 13 drives the second pulley 23 on the same side to rotate through the synchronous belt 24. Meanwhile, since the single spring 14 in the winding shaft assembly 10 applies winding force to the two first pulleys 13 simultaneously, the two first pulleys 13 are fixedly connected to the connecting rod 12 in the rotation direction of the connecting rod 12, and the winding force is provided by only one spring 14, the winding forces of the two first pulleys 13 are always identical. Therefore, when the driving mechanism 28 drives one of the two first pulleys 13 to rotate, one first pulley 13 drives the other first pulley 13 to rotate synchronously, thereby realizing the transmission of the synchronous belt 24. Meanwhile, the slider 26 fixed to the synchronous belt 24 drives the pull rod 25 to move, thereby opening or closing the shade fabric 27. Therefore, the movement consistency of the shade fabric 27 is ensured, thereby solving the problem that, when the pull rod 25 is subjected to uneven forces, the two sides of the shade fabric 27 move inconsistently, the pull rod 25 tilts, and the shade fabric 27 gets stuck in the guide rails 22 and cannot continue to operate.

When the driving mechanism 28 is connected to one of the two second pulleys 23 (that is, when the driving mechanism 28 is arranged at the front end of the sunroof assembly 20), the driving mechanism 28 drives one of the two second pulleys 23 to rotate, one of the two second pulleys 23 drives the synchronous belt 24 on the same side to rotate, and the synchronous belt 24 drives the first pulley 13 on the same side and the slider 26 fixed to the synchronous belt 24 to move. The first pulley 13 on the same side drives the first pulley 13 on the other side to rotate, so as to drive the synchronous belt 24 on the other side to move, the synchronous belt 24 on the other side then drives the second pulley 23 on the other side and the slider 26 fixed to the synchronous belt 24 on the other side to move, and the two sliders 26 on both sides drive the pull rod 25 to move, thereby opening or closing the shade fabric 27. Therefore, the movement consistency of the shade fabric 27 is ensured, thereby solving the problem that, when the pull rod 25 is subjected to uneven forces, the two sides of the shade fabric 27 move inconsistently, the pull rod 25 tilts, and the shade fabric 27 gets stuck in the guide rail 22 and cannot continue to operate.

In addition, the driving mechanism 28 may be connected to the two first pulleys 13 and/or the two second pulleys 23.

In this embodiment, optionally, the synchronous belt 24 is an open belt or a closed-loop belt.

It may be noted that the open belt is a straight belt whose two ends are not bonded to each other. After the open belt is looped around the first pulley 13 and the second pulley 23, the two ends of the open belt are fixed by the fixing portion 263 of the slider 26. Then, the open belt can be driven by the driving mechanism 28 to move, so that the ends of the open belt can undergo linear movement. When the open belt is in use, the belt length can be freely set within a certain range to achieve long-span configurations, thereby providing high flexibility and also having the advantages such as small production tolerances and reliable transmission. By the cooperation of the open belt with the first pulley 13 and the second pulley 23, the reciprocating motion can be accurately transmitted without slippage. The closed-loop belt, on the other hand, is an annular belt formed by bonding the two ends of the open belt together.

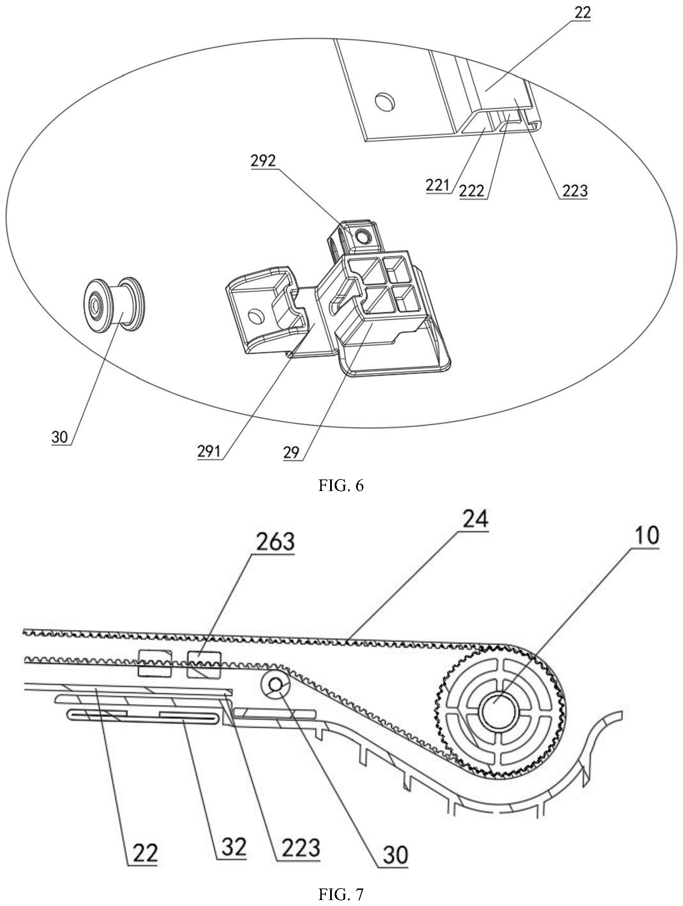

In one embodiment, as illustrated in FIG. 4 to FIG. 7, the sunroof assembly 20 further includes a support pulley 30 and a guide member 29 disposed at the first end 223 of each of the two guide rails 22. The guide member 29 defines a first recess 291. The support pulley 30 is fixed in the first recess 291 to support the synchronous belt 24.

It should be noted that the support pulley 30 is configured to support the synchronous belt 24, so as to prevent transmission failure caused by the sagging of the synchronous belt 24. The synchronous belt 24 is looped around the first pulley 13 and the second pulley 23 on the same side and cooperates with the slider 26 to form a closed-loop transmission path, the synchronous belt 24 is tensioned by the support pulley 30 and powered by the driving mechanism 28, and the power can be transmitted to the other side through the winding shaft assembly 10, thereby enabling synchronous movement of the winding shaft and the pull rod 25 on both sides, so as to open or close the shade fabric 27.

In this embodiment, further, the guide rail 22 defines a guide groove 221 and a slide groove 222 in communication with the guide groove 221, and the slide groove 222 is in sliding fit with the sliding portion 262. The guide member 29 is provided with a first limiting member 292 matched with the shape of the guide groove 221. The first limiting member 292 is embedded in the guide groove 221.

It may be noted that by providing the first limiting member 292, guidance can be provided for mounting the sliding portion 262 of the slider 26 into the guide rail 22. In addition, after the slider 26 is mounted in the guide rail 22, the guide groove 221 cooperates with the first limiting member 292 to prevent the slider 26 from sliding out of the first end 223 of the guide rail 22.

In one embodiment, as illustrated in FIG. 4, FIG. 5, and FIG. 8, the sunroof assembly 20 further includes a connecting member 33 disposed at the second end 224 of each of the two guide rails 22. The connecting member 33 defines a second recess 331. One of the two second pulleys 23 is fixed in the second recess 331. The second recess 331 provides support for the second pulley 23 and prevents the second pulley 23 from being exposed to the field of view of the passenger. In this embodiment, further, the connecting member 33 is provided with a second limiting member 332 matched with the shape of the guide groove 221. The second limiting member 332 is embedded in the guide groove 221. The guide groove 221 cooperates with the second limiting member 332 to prevent the slider 26 from sliding out of the second end 224 of the guide rail 22.

In one embodiment, each first pulley 13 and each second pulley 23 are gears. An inner surface of the synchronous belt 24 is provided with multiple convex teeth 241 matched with the gears. The gears are engaged with the multiple convex teeth 241. By engaging the gears with the convex teeth 241, the connection between the synchronous belt 24 and the first pulley 13 and the second pulley 23 on the same side can be established.

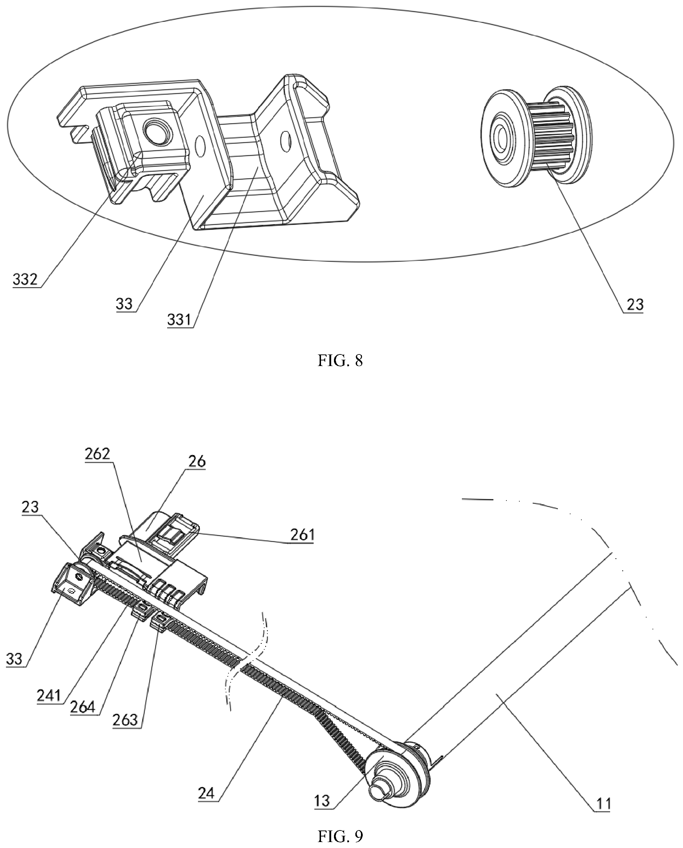

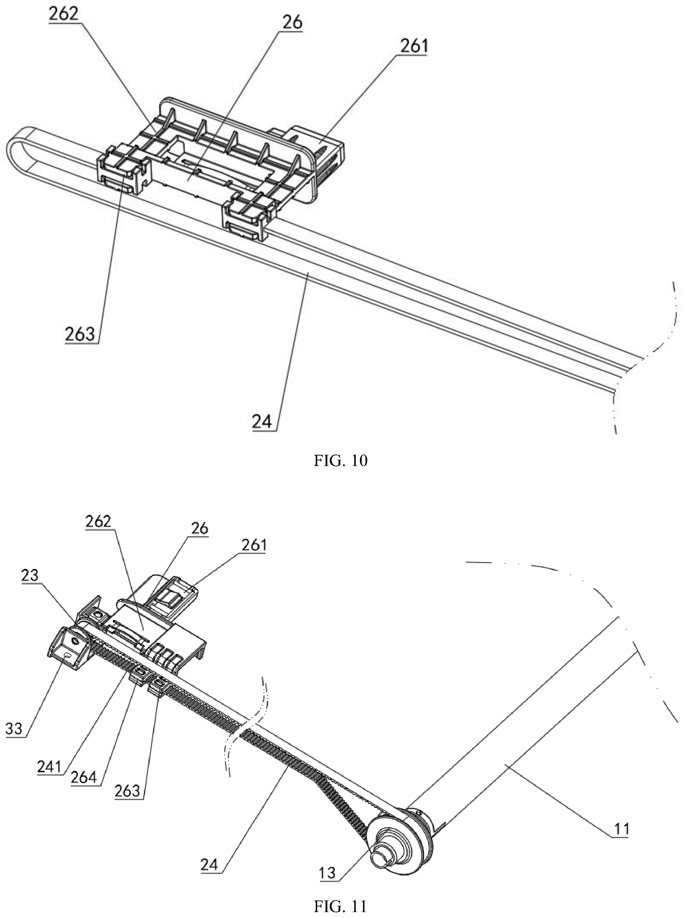

In this embodiment, further, as illustrated in FIG. 9 and FIG. 11, the fixing portion 263 of the slider 26 defines a recess portion 264 that is matched with and snap-fitted with a convex tooth 241 of the multiple convex teeth 241.

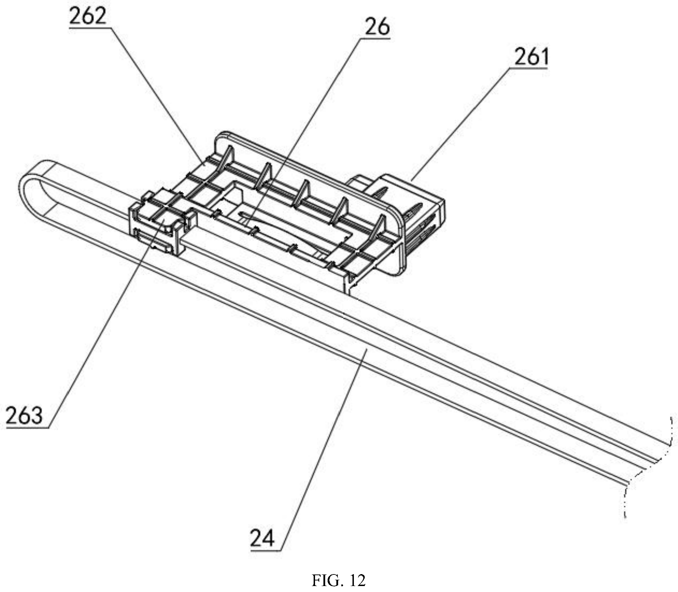

Alternatively, as illustrated in FIG. 10 and FIG. 12, in one embodiment, an injection-molded block 242 is provided on the synchronous belt 24. The fixing portion 263 is snap-fitted with the injection-molded block 242.

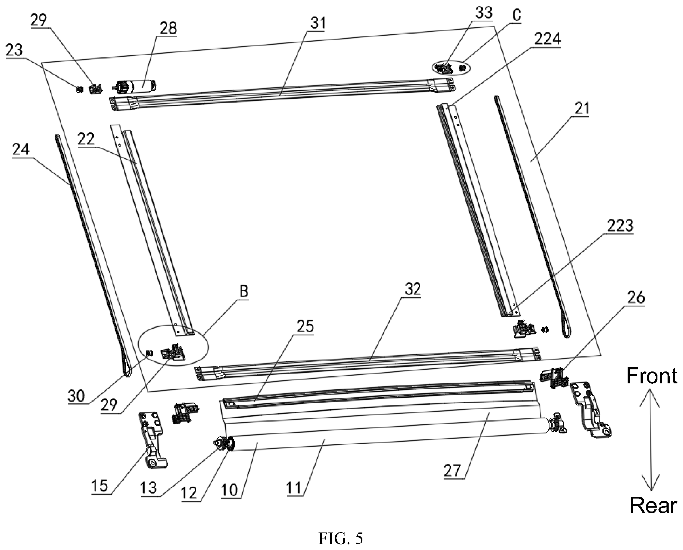

In one embodiment, as illustrated in FIG. 5, the sunroof assembly 20 further includes a front beam 31 and a rear beam 32. Two ends of the front beam 31 are fixed to the second ends 224 of the two guide rails 22. Two ends of the rear beam 32 are fixed to the first ends 223 of the two guide rails 22. The shade fabric 27 is supported by the rear beam 32.

It may be noted that in the present disclosure, if the glass 21 is inorganic glass, examples thereof include soda-lime glass (also known as soda-lime silicate glass), aluminosilicate glass, borate glass, borosilicate glass, lithium aluminosilicate glass, alkali-free glass, quartz glass, etc. Among these, soda-lime glass is particularly preferred. From the perspective of improving strength, the inorganic glass may also be tempered glass, and tempered glass may be any one of chemically tempered glass or physically tempered glass.

If the glass 21 is organic glass (resin), examples thereof include polycarbonate resin, polystyrene resin, aromatic polyester resin, acrylic resin, polyester resin, polyarylate resin, a polycondensate of halogenated bisphenol A and ethylene glycol, acrylic urethane resin, acrylic resin containing halogenated aryl groups, etc. Among these, polycarbonate resins such as aromatic polycarbonate resins and acrylic resins such as polymethyl methacrylate acrylic resins are preferred, polycarbonate resins are more preferred, and bisphenol A-type polycarbonate resins are particularly preferred. In addition, two or more of the above resins may be used in combination.

The technical features of the embodiments can be combined arbitrarily, and not all possible combinations of the technical features of the embodiments have been described for the sake of simplicity. However, as long as there is no contradiction between the combinations of these technical features, it can be considered that the combinations fall within the scope of the specification.

The embodiments only illustrate several embodiments of the present disclosure, and the description is relatively specific and detailed. However, this cannot be understood as a limitation to the scope of the present disclosure. It can be noted that, for those of ordinary skill in the art, a number of variations and modifications can be made without departing from the concept of the present disclosure, and all of those variations and modifications fall within the scope of protection of the present disclosure. Therefore, the scope of protection of the present disclosure shall be subject to the claims.

In addition, the terms "first" and "second" are only intended for illustrative purposes, rather than being construed as indicating or implying relative importance or implicitly designating the number of the technical features as indicated. Thus, the features defined by "first" and "second" may explicitly or implicitly include at least one of the features. In the description of the present disclosure, "a plurality of" or "multiple" means two or more than two, such as two, three, etc., unless stated otherwise.

In the present disclosure, unless stated or limited otherwise, the terms "mounted", "connected", "coupled", "fixed", or the like are used broadly, and may be, for example, fixed connections, detachable connections (such as connections with bolts and screws), or integral connections (such as riveting, welding); may also be mechanical or electrical connections or communicable with each other; may also be direct connections or indirect connections via intervening structures; may also be inner communications or interaction relationship of two elements, unless limited otherwise, which can be understood by those skilled in the art according to specific situations.

In addition, unless stated otherwise, the terms used to express a positional relationship or shape in any technical solution provided in the present disclosure include states or shapes that are approximate, similar, or close to the positional relationship or shape.

Any component provided in the present disclosure can be assembled by multiple independent constituent parts, or can be an independent component manufactured through an integrated molding process.

In the present disclosure, unless stated or limited otherwise, a first feature, when being referred to as being located "above" or "below" a second feature, may be in direct contact with the second feature, or in indirect contact with the second feature via an intermediate feature. The terms "vertical", "horizontal", "up", "down", "left", "right", and similar expressions used herein are only for the purpose of illustration, rather than presenting the only embodiment.

## Claims

1. A winding shaft assembly, comprising:
an inner tube;
a connecting rod rotatably embedded in and passing through the inner tube;
two first pulleys respectively disposed at two ends of the connecting rod and located outside the inner tube; wherein the two first pulleys are fixedly connected to the connecting rod in a rotation direction of the connecting rod, and the two first pulleys are movably connected to the connecting rod in an axial direction of the connecting rod;
a spring fixing seat disposed between the inner tube and the connecting rod and fixed at one end of the inner tube, wherein the spring fixing seat is movably connected to the connecting rod in the axial direction of the connecting rod;
a spring fixing shaft fixed to the connecting rod and located inside the inner tube;
a spring wound around the connecting rod, wherein the spring has one end fixed to the spring fixing seat and another end fixed to the spring fixing shaft; and
two winding shaft supports respectively disposed at the two ends of the connecting rod and located outside the two first pulleys; wherein the spring has an axial tension to enable the two first pulleys to be pushed outward to the two winding shaft supports in the axial direction of the connecting rod.

2. The winding shaft assembly of claim 1, wherein the inner tube, the connecting rod, the two first pulleys and the spring are coaxial.

3. The winding shaft assembly of claim 1, wherein the winding shaft assembly further comprises a fixing bushing, and the fixing bushing is disposed between the inner tube and the connecting rod and fixed at another end of the inner tube; and the connecting rod is rotatably mounted in the fixing bushing.

4. The winding shaft assembly of claim 1, wherein an inner sleeve is provided between the connecting rod and the spring.

5. The winding shaft assembly of claim 1, wherein an outer sleeve is provided between the spring and the inner tube.

6. The winding shaft assembly of claim 1, wherein the spring is a coil spring or a torsion spring.

7. A sunroof assembly, comprising:
glass;
the winding shaft assembly of any one of claims 1 to 6, wherein the winding shaft assembly is fixed to the glass;
two guide rails spaced apart from each other and respectively disposed at two opposite ends of the winding shaft assembly, wherein the two guide rails are fixed to the glass, and each of the two guide rails comprises a first end close to the winding shaft assembly and a second end away from the winding shaft assembly;
two second pulleys respectively disposed at second ends of the two guide rails, wherein a synchronous belt is connected between each first pulley and a corresponding second pulley;
a pull rod spaced apart from the winding shaft assembly, wherein the pull rod is slidably mounted between the two guide rails;
a shade fabric, wherein the shade fabric has one end fixed to the inner tube and another end fixed to the pull rod, and the shade fabric has two side edges respectively disposed in the two guide rails; and
a driving mechanism connected to at least one of the two first pulleys and/or at least one of the two second pulleys.

8. The sunroof assembly of claim 7, wherein two sliders are respectively provided at two ends of the pull rod, each of the two sliders comprises a mounting portion, a sliding portion, and a fixing portion connected in sequence, the mounting portion is fixed to the pull rod, the sliding portion is slidably mounted in a corresponding guide rail, and the fixing portion is fixed to the synchronous belt.

9. The sunroof assembly of claim 8, wherein the sunroof assembly further comprises a support pulley and a guide member disposed at the first end of each of the two guide rails, the guide member defines a first recess, and the support pulley is fixed in the first recess to support the synchronous belt.

10. The sunroof assembly of claim 9, wherein each of the two guide rails defines a guide groove and a slide groove in communication with the guide groove, and the slide groove is in sliding fit with the sliding portion; and the guide member is provided with a first limiting member matched with a shape of the guide groove, and the first limiting member is embedded in the guide groove.

11. The sunroof assembly of claim 10, wherein the sunroof assembly further comprises a connecting member disposed at the second end of each of the two guide rails, the connecting member defines a second recess, and one of the two second pulleys is fixed in the second recess.

12. The sunroof assembly of claim 11, wherein the connecting member is provided with a second limiting member matched with the shape of the guide groove, and the second limiting member is embedded in the guide groove.

13. The sunroof assembly of claim 7, wherein each of the two first pulleys and each of the two second pulleys are gears, an inner surface of the synchronous belt is provided with a plurality of convex teeth matched with the gears, and the gears are engaged with the plurality of convex teeth.

14. The sunroof assembly of claim 13, wherein the fixing portion of each of the two sliders defines a recess portion matched with and snap-fitted with a convex tooth of the plurality of convex teeth.

15. The sunroof assembly of claim 8, wherein an injection-molded block is provided on the synchronous belt, and the fixing portion is snap-fitted with the injection-molded block.

16. The sunroof assembly of claim 7, wherein the sunroof assembly further comprises a front beam and a rear beam, two ends of the front beam are fixed to the second ends of the two guide rails, two ends of the rear beam are fixed to first ends of the two guide rails, and the shade fabric is supported by the rear beam.

17. The sunroof assembly of claim 7, wherein the synchronous belt is an open belt or a closed-loop belt.
